# FASCICULE DE BREVET EUROPEEN

(11) **EP 2 722 513 B1**
(45) Date de publication et mention de la délivrance du brevet: **07.03.2018**
(21) Numéro de dépôt: 13185763.3
(22) Date de dépôt: 24.09.2013
(51) Int. Cl.: F02D 41/14, F02D 41/02, F02B 25/14, F02D 13/02, F02D 41/00

(54) **Dispositif de commande de moteur à combustion de vehicule automobile à stratégie de balayage ameliorée**
Steuervorrichtung des Verbrennungsmotors eines Kraftfahrzeugs mit verbesserter Scan-Strategie
Device for controlling an internal combustion engine of a motor vehicle with improved scanning strategy

(30) Priorité: 17.10.2012 FR 1259883
(43) Date de publication de la demande: 23.04.2014
(73) Titulaire: PSA Automobiles SA, 78300 Poissy (FR)
(72) Inventeur: Vimeux, Sébastien, 44300 NANTES (FR); Lesueur, Jean-Nicolas, 91370 VERRIERES LE BUISSON (FR); Climaud, Pascal, 78170 LA CELLE ST CLOUD (FR); Karrer, Maxime, 75011 PARIS (FR)

(56) Documents cités:
- EP-A1- 1 950 396
- EP-A2- 1 435 441
- FR-A1- 2 850 706
- FR-A1- 2 877 040
- FR-A1- 2 881 476
- FR-A1- 2 982 641

## Description

L'invention concerne les moteurs à combustion de véhicules automobiles et plus particulièrement le post traitement dans de tels moteurs, notamment lorsqu'ils sont à combustion essence. Il est connu pour le post traitement dans les moteurs d'utiliser une sonde à oxygène disposée sur la ligne d'échappement pour déduire la valeur de la richesse, comme par exemple dans le document EP 1 950 396 A1.

Les moteurs à essence suralimentés à injection directe peuvent générer un phénomène important de balayage - en anglais « scavenging » - des gaz frais de l'admission vers l'échappement. Sur un moteur notamment lorsqu'il est suralimenté et à injection directe d'essence, le couple maximal à faible régime peut être augmenté en autorisant un fort taux de balayage.

Le balayage est donc obtenu par une commande adéquate des soupapes d'admission et d'échappement. Il est obtenu notamment par suralimentation en croisant l'ouverture des soupapes d'admission et d'échappement de façon à faire transiter directement de l'air frais vers l'échappement et ainsi augmenter le débit total d'air entrant dans le moteur. Ainsi sur certaines applications près de 30% du débit d'air total admis par le moteur n'est pas emprisonné dans la chambre de combustion mais envoyé directement à l'échappement. Ceci améliore le remplissage en air frais, minimise les pertes liées à la boucle basse pression et permet donc d'augmenter la charge du moteur. Ceci a également pour effet de favoriser la consommation ainsi que la robustesse vis-à-vis des combustions anormales, notamment par une meilleure vidange de la chambre de combustion et une amélioration des conditions thermiques dans la chambre.

La présence d'un taux d'oxygène important à l'échappement dans les conditions de balayage implique que la richesse mesurée au niveau du catalyseur n'est plus l'image de la richesse dans la chambre de combustion. Une richesse 1 à l'échappement implique donc une combustion riche dans la chambre de combustion pour compenser l'excès du gaz oxygène O₂ à l'échappement.

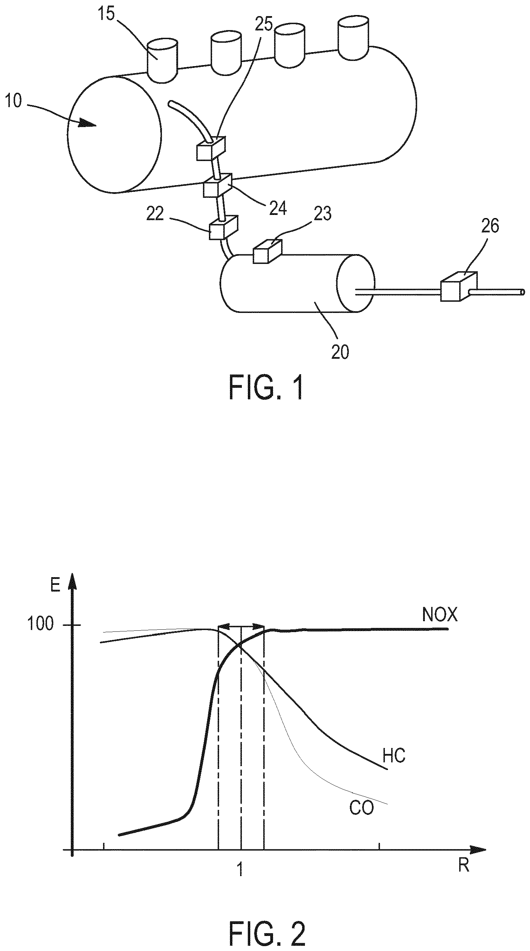

Un autre cas de figure consiste à rester pauvre à l'échappement pour limiter l'enrichissement dans la chambre de combustion. On parle alors de balayage en pauvre. Le balayage en pauvre a pour conséquence d'augmenter le taux d'oxygène dans les gaz d'échappement et de diminuer la richesse en entrée du catalyseur. Ceci a pour effet de diminuer fortement l'efficacité de conversion des polluants. En effet, le catalyseur trois voies ne convertit les polluants que sur une plage de richesse très étroite autour de richesse 1 c'est-à-dire autour de la richesse stoechiométrique, typiquement dans un intervalle de richesse de plus ou moins 0,005 autour de la richesse stoechiométrique. On a représenté sur la figure 2 l'évolution d'une efficacité E en pourcents du catalyseur en fonction d'une richesse R en entrée du catalyseur sur respectivement les oxydes d'azote NOx, le monoxyde de carbone CO, et le gaz hydrocarbure HC.

Le balayage en pauvre a également pour effet d'accélérer le vieillissement du catalyseur, caractérisé par une baisse d'efficacité de conversion des polluants ainsi qu'une diminution de la capacité de stockage de l'oxygène ou OSC pour « Oxygen Storage Capacity » en anglais.

Les richesses courantes en amont du catalyseur sur fortes charges peuvent aller de 0.9 autour de 10% de taux de balayage à près de 0.6 pour un taux de 30% de balayage. A un tel niveau de richesse, l'efficacité de conversion des oxydes d'azote du catalyseur trois voies est quasi nulle. Les émissions d'oxydes d'azote à la canule augmentent donc fortement.

Pour maintenir le niveau de balayage et donc améliorer la performance du moteur à faible régime tout en assurant un bon niveau de conversion de tous les polluants réglementés tels que CO, HC, NMHC, NOx, il est possible d'enrichir le mélange air-carburant dans la chambre de combustion. L'excès de carburant sera oxydé par l'excès d'oxygène dans la ligne d'échappement et la concentration en oxygène au niveau du catalyseur sera conforme à celle d'une richesse 1 soit le point d'iso-conversion de tous les polluants. Toutefois, cette post-oxydation, ou oxydation de l'excès de carburant en aval de la chambre de combustion, va générer un exotherme néfaste pour la tenue dans le temps du catalyseur.

L'objet de cette proposition est d'obtenir en dynamique une meilleure efficacité de dépollution, une meilleure performance, et/ou un meilleur compromis entre ces deux prestations tout en respectant les critères de protection thermiques et chimiques du catalyseur. On obtient ainsi un meilleur compromis entre la performance du moteur, sa robustesse aux combustions anormales, un niveau de conversion élevé des polluants, et la tenue du catalyseur dans le temps.

Ce but est atteint selon l'invention grâce à un dispositif de commande de moteur à combustion essence de véhicule automobile configuré pour prendre en compte une température d'un catalyseur d'échappement du moteur, une richesse en entrée du catalyseur et un taux d'oxygène en entrée du catalyseur, caractérisé en ce qu'il est configuré pour réaliser une détermination d'une température maximale admissible du catalyseur en fonction de la richesse et du taux d'oxygène et pour commander une modification d'au moins un paramètre parmi un taux de balayage du moteur et une richesse moteur si la température du catalyseur est supérieure à la température maximale admissible.

Avantageusement, le dispositif de commande est configuré pour que la richesse (24) en entrée du catalyseur (20) soit maintenue à au moins 0,8 , notamment à au moins 0,85, notamment à au moins 0.9 .

Il est à noter que la richesse en entrée du catalyseur n'est pas directement et uniquement liée au taux d'oxygène en entrée du catalyseur. En effet, d'autres paramètres rentrent en ligne de compte pour la mesure de la richesse, dont, notamment le caractère plus ou moins uniforme du mélange gazeux, selon que l'air de balayage soit intimement mélangé au reste des gaz d'échappement ou non.

La richesse est la résultante du taux d'oxygène et du taux de réducteurs. On peut avoir une richesse égale à 1 avec un important taux de réducteurs et un important taux d'oxygène, ou une richesse supérieure (respectivement inférieure) à 1 avec un taux d'oxygène important si le taux de réducteurs est encore plus (respectivement moins) important (relativement à la stoechiométrie).

Avantageusement, le dispositif est configuré pour piloter le clapet de décharge de régulateur de pression de turbocompresseur du moteur. Ce pilotage commande l'état d'ouverture/fermeture de ce clapet, d'un état de fermeture complète à un état d'ouverture complète en passant par tous les états intermédiaires d'ouverture partielle entre ces deux états.

Avantageusement, le dispositif est configuré pour mettre en oeuvre une modification du taux de balayage du moteur.

Avantageusement, le dispositif est configuré pour limiter le taux d'oxygène (en entrée du catalyseur) à au plus 8 %, notamment au plus 5 ou 3 ou 2%.

Avantageusement, le dispositif est configuré pour mettre en oeuvre une modification de la richesse en entrée du catalyseur.

Avantageusement, le dispositif est configuré pour mettre en oeuvre le pilotage d'un clapet de décharge de régulateur de pression de turbocompresseur du moteur.

Avantageusement, le dispositif est configuré pour mettre en oeuvre trois scénarii de modification de paramètre(s) dans lesquels scénarii le ou les paramètres modifiés comprennent respectivement le taux de balayage, une richesse moteur et un niveau d'ouverture/fermeture d'un clapet de décharge de régulateur de pression de turbocompresseur du moteur.

Avantageusement, le dispositif est configuré pour opter pour l'un ou l'autre des trois scenarii en tenant compte de paramètres de fonctionnement du véhicule.

Avantageusement, les paramètres de fonctionnement du véhicule sont des paramètres permettant de déduire une priorité d'un besoin de couple, d'un besoin de dépollution de gaz d'échappement, ou un compromis entre couple et dépollution de gaz d'échappement.

Avantageusement, le dispositif est configuré pour mettre en oeuvre, en réponse à une demande de couple moteur à bas régime, une phase de fonctionnement initiale dans laquelle le dispositif augmente le balayage et maintient une richesse en entrée du catalyseur à une valeur sensiblement égale à 1.

Avantageusement, le moteur est un moteur essence à injection directe suralimenté.

D'autres caractéristiques, buts et avantages de l'invention apparaitront à la lecture de la description détaillée qui va suivre, faite en référence aux figures annexées sur lesquelles :
- la figure 1 représente un moteur selon un mode de réalisation de l'invention ;
- la figure 2 est un tracé représentant un niveau d'efficacité d'un catalyseur en fonction d'une richesse mesurée en entrée de ce catalyseur.

Tel que représenté sur la figure 1, le mode de réalisation décrit maintenant comprend un moteur 10 comprenant au moins un cylindre 15 lequel est suralimenté au moyen d'un turbocompresseur. Dans le présent cas le moteur 10 comporte au moins un injecteur par cylindre. Cet injecteur peut avoir un positionnement latéral ou central dans la chambre de combustion. Un catalyseur trois voies 20 est disposé en aval du cylindre 15. Ce catalyseur 20 peut être composé d'un ou de plusieurs pains catalytiques avec des géométries et caractéristiques diverses. Le présent mode de réalisation comporte en outre des moyens de détermination de la température en entrée et dans le catalyseur, ici sous la forme d'un capteur de température 22 disposé en entrée du catalyseur et d'un capteur de température 23 disposé dans le catalyseur. La détermination de température peut en variante être réalisée par l'intermédiaire d'un ou plusieurs modèle(s) de calcul. Une sonde lambda 24, linéaire ou deux points, est disposée en amont du catalyseur 20 pour y déterminer la richesse des gaz. On adopte également ici un moyen de détermination du taux d'oxygène en amont du catalyseur, ici un capteur 25. La détermination du taux d'oxygène, réalisée ici par l'intermédiaire d'un tel capteur 25, peut en variante être réalisée par utilisation d'un modèle de calcul. Avantageusement, une sonde lambda 26 est placée en aval du catalyseur 20.

Le présent dispositif fonctionne de manière à toujours garantir l'intégrité du catalyseur 20. Ceci est un prérequis car la réglementation européenne par exemple impose le respect de seuils d'émissions à 160 000 km.

La grandeur de la température acceptable en tout point du catalyseur 20, pour limiter son vieillissement, dépend de la richesse et du taux d'oxygène des gaz immédiatement en amont de ce dernier. Ainsi, pour une richesse supérieure à 1 et un taux d'oxygène inférieur à 2 %, la température maximale est d'un ordre de grandeur de 1000°C. Pour une richesse supérieure à 0,9 et un taux d'oxygène inférieur à 3 %, la température maximale est d'un ordre de grandeur de 900°C. Pour une richesse supérieure à 0,8 et un taux d'oxygène inférieur à 5 %, la température maximale est d'un ordre de grandeur de 800°C.

Le présent dispositif adapte automatiquement et en dynamique les stratégies de balayage et d'injection qui influent sur le taux d'oxygène O₂, la richesse, ainsi que sur la température du catalyseur, afin de s'assurer que la température du catalyseur 20 respecte les seuils.

Actuellement, les stratégies ne sont pas adaptatives par rapport aux différents cas de vie du moteur mais calibrées en condition de fonctionnement stabilisées, en tenant compte de la limite de tenue thermique du catalyseur. Dans certains cas aucune stratégie de balayage n'est utilisée, ce qui diminue le couple disponible à faible régime et donc la performance du moteur et/ou augmente le risque de combustions anormales. Dans d'autres cas, un fort taux de balayage est utilisé mais avec une richesse au catalyseur différente de 1 et donc une efficacité de conversion des polluants faible. Enfin dans certains cas un léger taux de balayage est utilisé, avec une cible à richesse 1 dans le catalyseur mais un niveau de couple maximal à faible régime qui est légèrement en deçà de ce qui serait accessible, avec en plus un surcoût sur la consommation de carburant.

Les trois solutions citées impliquent respectivement une diminution des prestations dynamiques du moteur, une augmentation des pertes liées à la boucle basse pression et donc un impact sur la consommation, un risque d'apparition de combustions anormales de type cliquetis ou grondement - « rumble » en anglais -, une forte augmentation des émissions de polluants, principalement d'oxydes d'azote à la canule dans certaines situations de roulage, une légère diminution des prestations dynamiques ainsi qu'une augmentation du vieillissement thermique du catalyseur et un surcoût de consommation de carburant.

Il convient de comprendre qu'actuellement, la stratégie choisie parmi les trois ci-dessus est définie une fois pour toute sur chaque point de fonctionnement situé dans la zone usuelle de balayage, à faible régime et forte charge.

Dès que le conducteur réalise une accélération passant par ces points de fonctionnement, cette stratégie sera appliquée. Celle-ci est issue d'un compromis en conditions stabilisées sur chaque point de fonctionnement et n'est pas forcément l'optimal dans toutes les conditions transitoires rencontrées sur le véhicule. Par exemple, si l'on considère un point de fonctionnement à un régime de 1500 tours/minute et de 20 bars de Pression Moyenne Effective - PME - en régime stabilisé sur ce point de fonctionnement, les essais montrent que le meilleur réglage favorisant la performance et la robustesse de la combustion correspond à un taux de balayage de 8%. Avec ce niveau de balayage, si l'on injecte la quantité de carburant permettant d'avoir une richesse 1 dans le catalyseur, alors l'exotherme généré par la post-oxydation du carburant imbrûlé sera très important et la température maximale acceptable dans le catalyseur sera dépassée. Un tel réglage n'est donc pas acceptable en stabilisé. Considérons maintenant le cas réel d'un client roulant à faible charge et réalisant une accélération franche qui fait passer ponctuellement le moteur sur le point de 1500 tr/min et 20 bars. A ce moment, le catalyseur est encore relativement froid, ce qui correspond à la température du point de faible charge. Il serait donc possible de réaliser le taux de balayage de 8% et d'appliquer une richesse 1 en amont du catalyseur. La température du catalyseur va augmenter très rapidement par le phénomène de post-oxydation mais durant un laps de temps correspondant à la durée de l'accélération par exemple. Il est donc possible d'appliquer cette stratégie qui n'est pas envisageable en condition stabilisée.

Le présent mode de réalisation prend en compte les paramètres de fonctionnement du moteur pour pouvoir autoriser la réalisation en dynamique d'une stratégie qui serait non acceptable en stabilisé. Il s'agit d'un moyen d'optimiser la stratégie d'alimentation en air et en carburant afin de pouvoir bénéficier dans tous les cas de vie soit de la meilleure efficacité de dépollution, soit de la meilleure performance, soit du meilleur compromis entre les deux prestations tout en respectant les critères de protection thermique et chimique du catalyseur. Les stratégies d'alimentation en air et en carburant s'adaptent donc en continu en fonction des conditions de température, richesse et taux d'O₂ dans l'échappement afin de garantir les meilleures prestations.

Le dispositif selon le présent mode de réalisation permet, en cas de balayage se traduisant par un taux de 5% d'O₂ et une richesse de 1 en amont du catalyseur, le seuil à respecter étant alors de 800°C, si la température dépasse 800°C, soit de faire baisser la température du catalyseur en injectant moins de carburant afin de générer moins de post-oxydation donc moins d'exotherme, soit de faire passer le seuil acceptable à 900°C en diminuant le taux de balayage pour réduire le taux d'O₂, jusqu'à 3% ici. Ce deuxième scénario aura également pour effet de réduire l'exotherme et donc de diminuer la température du catalyseur.

On peut donc adapter en continu la stratégie d'injection ainsi que la stratégie de balayage en fonction de la prestation que l'on souhaite privilégier, que ce soit la performance ou la dépollution. Dans les deux cas il est avantageux par ailleurs de réadapter la charge en positionnant le clapet de décharge de régulateur de pression de turbocompresseur, ou « waste-gate » en anglais, pour répondre à la demande en couple. Dans le premier cas, le risque est présent si la richesse chambre devient inférieure à la stoechiométrie. Dans le second cas, la modification du croisement des soupapes et donc du remplissage implique de refermer le « waste-gate » ou clapet de décharge de régulateur de pression de turbocompresseur, pour maintenir le remplissage de la chambre de combustion.

Concrètement, dès que la volonté du conducteur nécessite l'activation d'un taux de balayage pour réaliser la charge souhaitée, alors la stratégie par défaut consiste ici à réaliser ce balayage et à enrichir la combustion afin de conserver une richesse 1 au catalyseur. De ce fait, la performance et la robustesse aux combustions anormales est assurée ainsi que l'efficacité optimale de dépollution.

A tout moment, la température du catalyseur, le taux d'oxygène en amont du catalyseur et la richesse en amont du catalyseur sont mesurées ou estimées. Dès que la température du catalyseur est supérieure au seuil acceptable pour chaque couple de richesse et taux d'O₂ donné, alors la stratégie s'adapte pour préserver le catalyseur.

Il est ici possible au choix de mettre en oeuvre l'un ou l'autre des trois scénarios suivants. Le premier scénario consiste à préserver la performance et l'efficacité de post-traitement en diminuant le balayage mais en fermant le clapet de décharge de régulateur de pression de turbocompresseur ce qui permet de conserver le niveau de remplissage. Cela aura pour effet de réduire le taux d'oxygène à l'échappement et donc l'exotherme lié à la post-oxydation de carburant imbrûlé. La richesse est toujours maintenue à 1 en entrée du catalyseur. Le second scénario consiste à préserver la performance au détriment de la dépollution en appauvrissant la combustion. Cela aura pour effet de réduire la post-oxydation de l'excès de carburant par l'air en aval de la chambre de combustion et donc de réduire la température du catalyseur. L'efficacité de post-traitement sera toutefois fortement réduite. Le troisième scénario consiste à préserver l'efficacité de post-traitement au détriment de la performance en conservant une richesse 1 au niveau du catalyseur et en diminuant le taux de balayage. Ceci aura pour effet de diminuer la charge du moteur et donc de réduire la température et également de réduire la quantité de carburant qui sera post-oxydé en aval de la chambre de combustion.

La stratégie permet de favoriser l'une, l'autre, ou les deux prestations parmi la dépollution et la performance en fonction de nombre de paramètres extérieurs voire de basculer alternativement de l'une à l'autre en fonction du cas de vie.

Les principaux avantages sont donc de permettre de respecter les seuils d'émissions sur les cycles très chargés sans pénaliser le couple à bas régime du moteur, et sans impacter le coût ni la durabilité des composants.

## Revendications

1. Dispositif de commande de moteur à combustion essence de véhicule automobile (10) configuré pour prendre en compte une température (22,23) d'un catalyseur (20) d'échappement du moteur, une richesse (24) en entrée du catalyseur (20) et un taux d'oxygène (25) en entrée du catalyseur (20), **caractérisé en ce qu'**il est configuré pour réaliser une détermination d'une température maximale admissible du catalyseur (20) en fonction de la richesse (24) mesurée par une sonde lambda (24), et du taux d'oxygène (25) mesuré par un capteur (25) ou déterminé par utilisation d'un modèle de calcul, et pour commander une modification d'au moins un paramètre parmi un taux de balayage du moteur et une richesse moteur si la température du catalyseur (20) est supérieure à la température maximale admissible.

2. Dispositif de commande selon la revendication précédente, **caractérisé en ce que** la richesse (24) en entrée du catalyseur (20) est maintenue à au moins 0,8 , notamment à au moins 0,85, notamment à au moins 0.9 .

3. Dispositif selon la revendication 1 ou 2, **caractérisé en ce qu'**il est configuré pour piloter un clapet de décharge de régulateur de pression de turbocompresseur du moteur (10).

4. Dispositif selon l'une des revendications précédentes, **caractérisé en ce qu'**il est configuré pour mettre en oeuvre une modification du taux de balayage du moteur (10).

5. Dispositif selon l'une des revendications précédentes, **caractérisé en ce qu'**il est configuré pour limiter le taux d'oxygène (25) à au plus 8 %, notamment au plus 5 ou 3 ou 2%.

6. Dispositif selon l'une quelconque des revendications précédentes, **caractérisé en ce qu'**il est configuré pour mettre en oeuvre une modification de la richesse en entrée du catalyseur (20).

7. Dispositif selon l'une quelconque des revendications précédentes, **caractérisé en ce qu'**il est configuré pour mettre en oeuvre une modification du niveau d'ouverture/fermeture d'un clapet de décharge de régulateur de pression de turbocompresseur du moteur (10).

8. Dispositif selon l'une quelconque des revendications précédentes, **caractérisé en ce qu'**il est configuré pour mettre en oeuvre trois scénarii de modification de paramètre(s) dans lesquels scénarii le ou les paramètres modifiés comprennent respectivement le taux de balayage, une richesse moteur et un niveau d'ouverture/fermeture d'un clapet de décharge de régulateur de pression de turbocompresseur du moteur (10).

9. Dispositif selon la revendication précédente, **caractérisé en ce qu'**il est configuré pour opter pour l'un ou l'autre des trois scenarii en tenant compte de paramètres de fonctionnement du véhicule.

10. Dispositif selon la revendication précédente, **caractérisé en ce que** les paramètres de fonctionnement du véhicule sont des paramètres permettant de déduire une priorité d'un besoin de couple, d'un besoin de dépollution de gaz d'échappement, ou un compromis entre couple et dépollution de gaz d'échappement.

11. Dispositif selon l'une quelconque des revendications précédentes, **caractérisé en ce qu'**il est configuré pour mettre en oeuvre, en réponse à une demande de couple moteur à bas régime, une phase de fonctionnement initiale dans laquelle le dispositif augmente le balayage et maintient une richesse en entrée du catalyseur (20) à une valeur sensiblement égale à 1.

12. Dispositif selon l'une quelconque des revendications précédentes, **caractérisé en ce que** le moteur (10) est un moteur à injection directe suralimenté.

## Patentansprüche

1. Steuervorrichtung eines Benzinverbrennungsmotors eines Kraftfahrzeugs (10), die konfiguriert ist, um eine Temperatur (22, 23) eines Katalysators (20) eines Abgasstrangs des Motors, eine Reichhaltigkeit (24) am Eingang des Katalysators (20) und eine Sauerstoffrate (25) am Eingang des Katalysators (20) zu berücksichtigen, **dadurch gekennzeichnet, dass** sie konfiguriert ist, um eine Bestimmung einer maximal zulässigen Temperatur des Katalysators (20) in Abhängigkeit von der Reichhaltigkeit (24), die von einer Lambdasonde (24) gemessen wird, und einer Sauerstoffrate (25), die von einem Fühler (25) gemessen oder durch Verwenden eines Rechenmoduls bestimmt wird, auszuführen, und um eine Änderung mindestens eines Parameters aus einer Scanrate des Motors und einer Motorreichhaltigkeit zu steuern, falls die Temperatur des Katalysators (20) größer ist als die maximal zulässige Temperatur.

2. Steuervorrichtung nach dem vorhergehenden Anspruch, **dadurch gekennzeichnet, dass** die Reichhaltigkeit (24) am Eingang des Katalysators (20) auf mindestens 0,8, insbesondere auf mindestens 0,85, insbesondere auf mindestens 0,9 gehalten wird.

3. Vorrichtung nach Anspruch 1 oder 2, **dadurch gekennzeichnet, dass** sie konfiguriert ist, um eine Ablassklappe eines Turboverdichter-Druckreglers des Motors (10) zu steuern.

4. Vorrichtung nach einem der vorhergehenden Ansprüche, **dadurch gekennzeichnet, dass** sie konfiguriert ist, um eine Änderung der Scanrate des Motors (10) umzusetzen.

5. Vorrichtung nach einem der vorhergehenden Ansprüche, **dadurch gekennzeichnet, dass** sie konfiguriert ist, um die Sauerstoffrate (25) auf maximal 8 %, insbesondere maximal 5 oder 3 oder 2 % zu beschränken.

6. Vorrichtung nach einem der vorhergehenden Ansprüche, **dadurch gekennzeichnet, dass** sie konfiguriert ist, um eine Änderung der Reichhaltigkeit am Eingang des Katalysators (20) umzusetzen.

7. Vorrichtung nach einem der vorhergehenden Ansprüche, **dadurch gekennzeichnet, dass** sie konfiguriert ist, um eine Änderung des Öffnungs-/Schließniveaus einer Ablassklappe eines Turbokompressor-Druckreglers des Motors (10) umzusetzen.

8. Vorrichtung nach einem der vorhergehenden Ansprüche, **dadurch gekennzeichnet, dass** sie konfiguriert ist, um mindestens drei Änderungsszenarien von Parameter(n) umzusetzen, wobei in den Szenarien der modifizierte oder die modifizierten Parameter jeweils die Scanrate, eine Motorreichhaltigkeit und ein Öffnungs-/Schließniveau einer Ablassklappe eines Turbokompressor-Druckreglers des Motors (10) umfassen.

9. Vorrichtung nach dem vorhergehenden Anspruch, **dadurch gekennzeichnet, dass** sie konfiguriert ist, um das eine oder das andere der drei Szenarien unter Berücksichtigung von Betriebsparametern des Fahrzeugs festzulegen.

10. Vorrichtung nach dem vorhergehenden Anspruch, **dadurch gekennzeichnet, dass** die Betriebsparameter des Fahrzeugs Parameter sind, die es erlauben, einen Vorrang eines Drehmomentbedarfs, eines Abgasreinigungsbedarfs oder einen Kompromiss zwischen Drehmoment und Abgasreinigung abzuleiten.

11. Vorrichtung nach einem der vorhergehenden Ansprüche, **dadurch gekennzeichnet, dass** sie konfiguriert ist, um als Reaktion auf eine Drehmomentnachfrage bei niedriger Drehzahl eine anfängliche Betriebsphase umzusetzen, bei der die Vorrichtung das Scannen erhöht und eine Reichhaltigkeit am Eingang des Katalysators (20) auf einem Wert hält, der im Wesentlichen gleich 1 ist.

12. Vorrichtung nach einem der vorhergehenden Ansprüche, **dadurch gekennzeichnet, dass** der Motor (10) ein aufgeladener Motor mit Direkteinspritzung ist.

## Claims

1. A device for controlling a petrol combustion engine of a motor vehicle (10) configured to take into account a temperature (22, 23) of an exhaust catalyst (20) of the engine, a richness (24) at the inlet of the catalyst (20) and an oxygen level (25) at the inlet of the catalyst (20), **characterized in that** it is configured to carry out a determining of a maximum permissible temperature of the catalyst (20) as a function of the richness (24) measured by a lambda probe (24), and of the oxygen level (25) measured by a sensor (25) or determined by using a calculation model, and to control a modification of at least one parameter from a sweep rate of the engine and an engine richness, if the temperature of the catalyst (20) is greater than the maximum permissible temperature.

2. The device for controlling according to the preceding claim, **characterized in that** the richness (24) at the inlet of the catalyst (20) is maintained at at least 0.8, in particular at at least 0.85, in particular at at least 0.9.

3. The device according to Claim 1 or 2, **characterized in that** it is configured to drive a turbocharger pressure regulator discharge valve of the engine (10).

4. The device according to one of the preceding claims, **characterized in that** it is configured to implement a modification of the sweep rate of the engine (10).

5. The device according to one of the preceding claims, **characterized in that** it is configured to limit the oxygen level (25) to at most 8%, in particular at most 5 or 3 or 2%.

6. The device according to any one of the preceding claims, **characterized in that** it is configured to implement a modification of the richness at the inlet of the catalyst (20).

7. The device according to any one of the preceding claims, **characterized in that** it is configured to implement a modification of the opening/closing level of a turbocharger pressure regulator discharge valve of the engine (10).

8. The device according to any one of the preceding claims, **characterized in that** it is configured to implement three modification scenarios of (a) parameter(s) in which scenarios the modified parameter(s) include respectively the sweep rate, an engine richness and an opening/closing level of a turbocharger pressure regulator discharge valve of the engine (10).

9. The device according to the preceding claim, **characterized in that** it is configured to opt for one or other of the three scenarios, taking into account operating parameters of the vehicle.

10. The device according to the preceding claim, **characterized in that** the operating parameters of the vehicle are parameters permitting a deduction of a priority of a torque requirement, an exhaust gas decontamination requirement, or a compromise between torque and exhaust gas decontamination.

11. The device according to any one of the preceding claims, **characterized in that** it is configured to implement, in response to an engine torque requirement at low revolutions, an initial operating phase in which the device increases the sweep and maintains a richness at the inlet of the catalyst (20) at a value substantially equal to 1.

12. The device according to any one of the preceding claims, **characterized in that** the engine (10) is a direct injection supercharged engine.
